# EUROPÄISCHE PATENTANMELDUNG

(11) **EP 2 886 833 A1**
(43) Veröffentlichungstag der Anmeldung: **24.06.2015**
(21) Anmeldenummer: 13006001.5
(22) Anmeldetag: 23.12.2013
(51) Int. Cl.: F02C 6/16, F04D 27/02, H02J 15/00

(54) **Vorrichtung zur Erzeugung von Druckluft oder anderen Gasen**

(71) Anmelder: Boge Kompressoren Otto Boge GmbH & Co. KG, 33739 Bielefeld (DE)
(72) Erfinder: Dämgen, Ulrich, 58636 Iserlohn (DE); Meier, Thorsten, 32756 Detmold (DE)
(74) Vertreter: Heiland, Karsten

(57) **Zusammenfassung**

Die Erfindung betrifft eine Vorrichtung zur Erzeugung von Druckluft oder anderen unter Druck stehenden Gasen, mit mindestens einem Hochdruckverdichter (12) und einem Niederdruckverdichter (11) und insbesondere einem nachgeordneten Gasspeicher (Behälter 13). Erfindungsgemäß ist der Hochdruckverdichter eine Turbomaschine mit verstellbaren Leitschaufeln und wird wechselweise in der einen Richtung als Kompressor und in der anderen Richtung als Expansionsmaschine durchströmt.

## Beschreibung

Die Erfindung betrifft eine Vorrichtung zur Erzeugung von Druckluft oder anderen unter Druck stehenden Gasen, mit mindestens je einem Hochdruckverdichter und einem Niederdruckverdichter, und insbesondere einem nachgeordneten Gasspeicher.

Für die Erzeugung von Druckluft ist es bekannt, die Luft, ausgehend vom Normaldruck der Umgebung, über mehrere Stufen zu komprimieren, da die Verdichtung auf einen höheren Druck durch nur eine Stufe unwirtschaftlich ist und/oder technische Probleme mit sich bringt, die durch eine mehrstufige Verdichtung vermieden werden können.

Typischerweise wird die Druckluft in einem Behälter gespeichert und nach Bedarf aus dem Behälter abgegeben. Bei stark schwankendem Bedarf können sich im Behälter große Druckunterschiede ergeben. Entsprechend schwierig ist die wirtschaftliche Erzeugung der Druckluft mit möglichst hohem Wirkungsgrad.

Aufgabe der vorliegenden Erfindung ist die Schaffung einer Vorrichtung zur wirtschaftlichen Erzeugung von Druckluft, insbesondere mit stark schwankenden Druckverhältnissen.

Eine erfindungsgemäße Vorrichtung weist die Merkmale des Anspruchs 1 auf. Demnach ist der Hochdruckverdichter eine Turbomaschine der insbesondere radialen Bauart mit verstellbaren Leitschaufeln und wechselweise in der einen Richtung als Kompressor und in der anderen Richtung als Expansionsmaschine durchströmbar. Vorzugsweise wird mit dem Niederdruckverdichter Druckluft von nahezu konstantem Druck oder geringer Bandbreite erzeugt. Der Hochdruckverdichter stellt demgegenüber Druckluft mit relativ großen Druckunterschieden zur Verfügung.

Beispielsweise soll auf der Hochdruckseite des Hochdruckverdichters Druckluft mit etwa 40 bis 100 bar zur Verfügung stehen. Der Niederdruckverdichter komprimiert beispielsweise auf etwa 20 bar, während der Hochdruckverdichter diesen Druck etwa verdoppelt bis verfünffacht. Die erforderliche Variabilität der Turbomaschine wird erreicht durch Anpassung der Drehzahl, insbesondere in Abhängigkeit vom Druckverhältnis (Hochdruckseite zu Niederdruckseite der Turbomaschine), und Verstellung der Leitschaufeln zwischen Laufrad und Spirale, so dass unterschiedliche Massenströme erzielbar sind. Die Verstellung von Leitschaufeln zwischen einem Laufrad und einer Spirale in einer Turbomaschine der radialen Bauart ermöglicht eine besonders gute Anpassung an die wechselnde Radial-Durchströmungsgeschwindigkeit, wie sie bei wechselndem Druck auf der Hochdruckseite des Hochdruckverdichters auftritt.

Bei bestimmten Anwendungsfällen kann die nachgefragte Druckluft von deutlich geringerem Druck sein als die gespeicherte Druckluft. Vorteilhafterweise ist deshalb dem Hochdruckverdichter eine elektrische Antriebsmaschine zugeordnet, die auch als Generator arbeiten kann. Vorzugsweise gilt dies auch für den Niederdruckverdichter, insbesondere wenn dieser wechselweise als Verdichter und als Expansionsmaschine durchströmt wird.. Bei der Entnahme der Druckluft aus dem Behälter kann die Druckluft durch den Hochdruckverdichter und gegebenenfalls auch den Niederdruckverdichter geleitet werden, so dass dabei elektrische Energie erzeugt wird. Auch für diesen Zweck ist die Ausbildung der Turbomaschine des Hochdruckverdichters mit verstellbaren Leitschaufeln vorteilhaft. Trotz unterschiedlichster Druckverhältnisse kann mit hohem Wirkungsgrad elektrische Energie beim Ausspeichern der Druckluft erzeugt werden.

In der erfindungsgemäßen Vorrichtung können als Niederdruckverdichter insbesondere eine Turbomaschine oder eine Kolbenmaschine mit Hubkolben oder Drehkolben vorgesehen sein, insbesondere ein Schraubenkompressor. Bei Verwendung einer Turbomaschine weist diese vorzugsweise feststehende oder keine Leitschaufeln auf. Nach einem weiteren Gedanken der Erfindung ist zwischen Hochdruckverdichter und Niederdruckverdichter ein Abzweig zu einer Turbine vorgesehen, wobei der Turbine eine Brennkammer zugeordnet sein kann und wobei die Turbine insbesondere mit einem elektrischen Generator verbunden ist. Beim Ausspeichern der Druckluft kann diese im Hochdruckverdichter Arbeit verrichten und einen Motor-Generator antreiben. Die auf der Niederdruckseite des Hochdruckverdichters austretende Druckluft kann durch eine weitere Turbine mit zugeordnetem Generator geleitet werden. Vorzugsweise wird die Druckluft auf dem Weg zu der weiteren Turbine in einer Brennkammer erhitzt. Der Wirkungsgrad der weiteren Turbine wird dadurch insgesamt verbessert. Auch kann die Aufgabenteilung zwischen Niederdruckverdichter mit Antriebsmotor und weiterer Turbine mit Generator vorteilhaft sein für den Gesamtwirkungsgrad der Vorrichtung.

Gegenstand der Erfindung ist auch ein Verfahren zur Herstellung und/oder Speicherung von Druckluft oder anderen Gasen in Behältern unter Verwendung einer Vorrichtung wie sie voranstehend erläutert ist, unter Berücksichtigung der verschiedenen Ausführungsformen und Alternativen.

Besonders vorteilhaft ist die voranstehend erläuterte Vorrichtung verwendbar für ein Verfahren zur mittelbaren Speicherung elektrischer Energie durch Kompression und Expansion von Druckluft oder anderen Gasen. Gerade bei der Speicherung elektrischer Energie durch Druckluft können im Speicher hohe Druckunterschiede auftreten. Als Speicher können auch geologische Formationen vorgesehen sein. Der Begriff "Behälter" (für die Speicherung von Gasen) ist deshalb im weitesten Sinne zu verstehen und schließt auch natürlich vorhandene oder künstlich erzeugte Hohlräume unter der Erdoberfläche ein. Im engeren Sinne handelt es sich um ein Gefäß mit dichter Wandung.

Vorzugsweise wird der Hochdruckverdichter mit einem Druckverhältnis zwischen 1,5 und 4 betrieben. Das Druckverhältnis bezieht sich auf den Druck auf der Hochdruckseite des Hochdruckverdichters relativ zum Druck auf der Niederdruckseite des Hochdruckverdichters. Dabei wird davon ausgegangen, dass der Druck auf der Niederdruckseite des Hochdruckverdichters im Wesentlichen dem Druck auf der Hochdruckseite des Niederdruckverdichters entspricht, welcher hier vorzugsweise mit einem insbesondere möglichst konstanten Druck zwischen 10 bis 60 bar, beispielsweise 20 bar angenommen wird.

Ein Quotient aus maximalem und minimalem Druckverhältnis des Hochdruckverdichters ist vorzugsweise größer als 1,3, insbesondere größer als 1,8.

Vorteilhafterweise wird das Gas bei der Expansion nach dem Verlassen des Hochdruckverdichters - welcher hier als Expansionsturbine arbeitet - mit Brennstoff erhitzt und einer Turbine mit Generator zugeführt. Gerade bei der Rückgewinnung elektrischer Energie verbessert dies den Wirkungsgrad.

Nach einem weiteren Gedanken der Erfindung schwankt der Druck auf der Hochdruckseite des Niederdruckverdichters weniger als +/- 15%, vorzugsweise weniger als 5% um seinen Mittelwert. Insbesondere schwankt der Druck auf der Hochdruckseite des Hochdruckverdichters mehr als +/- 20%, vorzugsweise über +/- 30% um seinen Mittelwert.

Zur Verbesserung des Wirkungsgrades kann weiter vorgesehen sein, dass im Expansionsbetrieb auf der Niederdruckseite des Hochdruckverdichters ein etwas höherer Druck vorliegt als im Kompressionsbetrieb. Möglich ist dies durch Drehzahlanpassung und Leitschaufelverstellung der Turbomaschine des Hochdruckverdichters. Der Vorteil besteht darin, dass der Massenstrom durch den dann als Turbine arbeitenden Niederdruckverdichter erhöht und seine Nennleistung voll ausgenutzt sowie sein Betriebspunkt bei gleicher Drehzahl im Cordier-Diagramm vom Optimum für Kompressoren zum Optimum für Expansionsmaschinen verschoben werden kann. Dabei ist vorgesehen, dass im Expansionsbetrieb auch der Niederdruckverdichter einen Generator antreibt oder eine weitere Turbine mit Generator als Niederdruckmaschine zugeordnet ist.

Vorrichtung und Verfahren gemäß der Erfindung können weiterhin ergänzt werden durch an sich bekannte Maßnahmen zur Behandlung der Druckluft. So können insbesondere auf den Hochdruckseiten der beiden Verdichter Kondensatableiter und/oder Trockner zur Entfernung der Feuchte aus dem komprimierten Gas vorgesehen sein. Außerdem können Kühler bzw. Wärmetauscher für die Abfuhr der Wärme aus dem komprimierten Gas vorgesehen sein. Möglich ist auch eine Zwischenspeicherung der abgeführten Wärme und Rückführung im Expansionsbetrieb. Besonders vorteilhaft ist eine Wärmespeicherung und Rückführung im Zusammenhang mit der mittelbaren Speicherung elektrischer Energie durch Vorrichtungen der Anmelderin, wie sie in den deutschen Gebrauchsmustern DE 20 2011 106 400 und DE 20 2011 106 852 offenbart sind. Auf den Inhalt der genannten Gebrauchsmuster wird hiermit im Rahmen der vorliegenden Erfindung ausdrücklich Bezug genommen.

Zwischen Behälter und Hochdruckturbine oder an anderer Stelle können Schalt- und Regelventile vorgesehen sein. Der Motor zum Antrieb des Hochdruckverdichters ist drehzahlregelbar. Möglich ist dies auch für den Motor zum Antrieb des Niederdruckverdichters.

Im Zusammenhang mit dem Niederdruckverdichter können die üblichen Regelverfahren Anwendung finden, wie Ventiloffenhaltung bei Hubkolben, Ansaugdrosselregler oder Regelschieber für Volumen/Umdrehung bei Schraubenkompressor. Sofern der Niederdruckverdichter eine Turbomaschine bzw. ein Turbokompressor ist, kann dieser für nahezu konstanten Druck und Massenstrom auch ohne verstellbare Leitschaufeln und somit weniger aufwändig gebaut werden.

Der Hochdruckverdichter mit verstellbaren Leitschaufeln ist insbesondere einstufig ausgebildet, kann aber auch aus zwei oder mehr in Reihe geschalteten Turbostufen bestehen. Beispielsweise kann an zwei Wellenenden eines vorzugsweise drehzahlregelbaren Motor-Generators jeweils eine Turbostufe mit verstellbaren Leitschaufeln angebaut sein, wobei die beiden Turbostufen strömungstechnisch in Reihe geschaltet sind.

Die Erfindung ist nicht beschränkt auf die Anwendung im Zusammenhang mit Druckluft. Vielmehr ist auch die Kompression und gegebenenfalls Expansion von anderen Gasen angesprochen.

Weitere Merkmale der Erfindung ergeben sich aus der Beschreibung im Übrigen und aus den Ansprüchen. Vorteilhafte Ausführungsformen der Erfindung werden nachfolgend anhand von Zeichnungen näher erläutert. Es zeigen:
- Fig. 1: eine Funktionsskizze mit Niederdruckverdichter, Hochdruckverdichter und Speicherbehälter,
- Fig. 2: einen Querschnitt durch den Hochdruckverdichter in Figur 1 gemäß der Linie II-II,
- Fig. 3: eine Funktionsskizze einer weiteren Ausführungsform, nämlich mit einer weiteren Turbine und hierzu vorgeordneter Brennkammer.

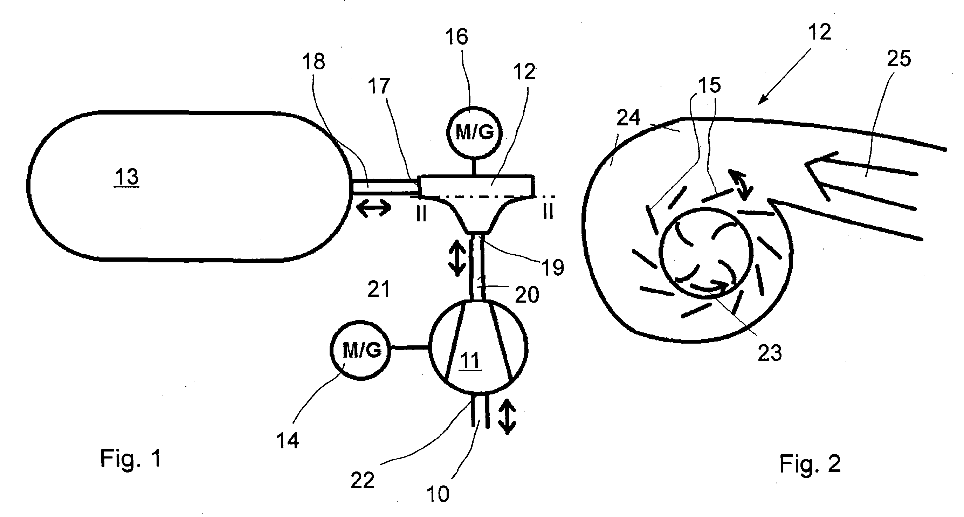

Gemäß Figur 1 wird unter Normaldruck stehende Luft in einer Leitung 10 von einem Niederdruckverdichter 11 und einem anschließenden Hochdruckverdichter 12 komprimiert und in einem Behälter 13 gespeichert. Der Niederdruckverdichter 11 ist vorzugsweise ein Kolbenkompressor oder Schraubenkompressor und durch eine elektrische Maschine 14 angetrieben. Auch eine Turbomaschine kann vorteilhaft sein.

Bei dem Hochdruckverdichter 12 handelt es sich um eine Turbomaschine mit verstellbaren Leitschaufeln 15. Auch hier ist als Antrieb eine elektrische Maschine 16 vorgesehen.

Die Leitschaufeln 15 weisen vorzugsweise beidseitig spitze Enden auf bzw. sind an beiden Enden spitz ausgebildet, was bedeutet, dass im Querschnitt ein Winkel von unter 70°, vorzugsweise unter 40° zu erkennen ist. Dadurch wird in beiden Durchfluss-Richtungen eine Strömung ohne Strömungsabriss bzw. ohne Totwassergebiet ermöglicht.

Die Vorrichtung ist für Kompression und Expansion ausgelegt. Entsprechend sind beide elektrische Maschinen als Motor und Generator vorgesehen, zumindest die elektrische Maschine 16 des Hochdruckverdichters 12.

Eine Hochdruckseite 17 des Hochdruckverdichters 12 steht über eine Leitung 18 mit dem Behälter 13 in Verbindung. Eine Niederdruckseite 19 des Hochdruckverdichters 12 ist über eine Leitung 20 mit einer Hochdruckseite 21 des Niederdruckverdichters 11 verbunden. Eine Niederdruckseite 22 des Niederdruckverdichters 11 ist an die Leitung 10 angeschlossen.

Der Hochdruckverdichter 12 ist als Radialturbine ausgebildet mit Laufrad 23 in einer Spirale 24, wobei die genannten Leitschaufeln 15 in der Spirale 24 angeordnet sind. Figur 2 zeigt den Hochdruckverdichter im Betrieb als Turbine, also bei Expansion der im Behälter 13 gespeicherten Druckluft. Diese strömt in Richtung eines Pfeils 25 in die Spirale 24 und treibt das Laufrad 23 an.

In nicht näher gezeigter Weise, können im Bereich der unter Druck stehenden Leitungen 20,18 Kühler, Trockner oder Schaltventile vorgesehen sein. Auch kann ein Wärmespeicher zur Luftabkühlung/Lufterwärmung vorgesehen sein. Die Druckluft im Behälter 13 ist bei Kompression ohne Kühlung deutlich wärmer als die Luft im Bereich der Leitung 10. Die Wärme wird über die Wandung des Behälters 13 abgegeben und geht verloren. Zweckmäßig ist deshalb die Wärmeabfuhr aus der Druckluft vor der Speicherung im Behälter 13. Bei Ausspeicherung der Druckluft aus dem Behälter 13 wird die Wärme der Druckluft wieder zugeführt, insbesondere im Bereich der Leitungen 18 und 20, gegebenenfalls auch im Bereich der Leitung 10.

Der Hochdruckverdichter 12 mit verstellbaren Leitschaufeln kann, anders als in Fig. 1 dargestellt, nicht nur einstufig sein, sondern auch aus zwei oder mehr in Reihe geschalteten Turbostufen bestehen. Beispielsweise kann an zwei Wellenenden des Motor-Generators 16 gemäß Fig. 1 jeweils eine Turbostufe mit verstellbaren Leitschaufeln angebaut sein, wobei die beiden Turbostufen strömungstechnisch in Reihe geschaltet sind. Der Motor-Generator 16 ist vorzugsweise drehzahlregelbar.

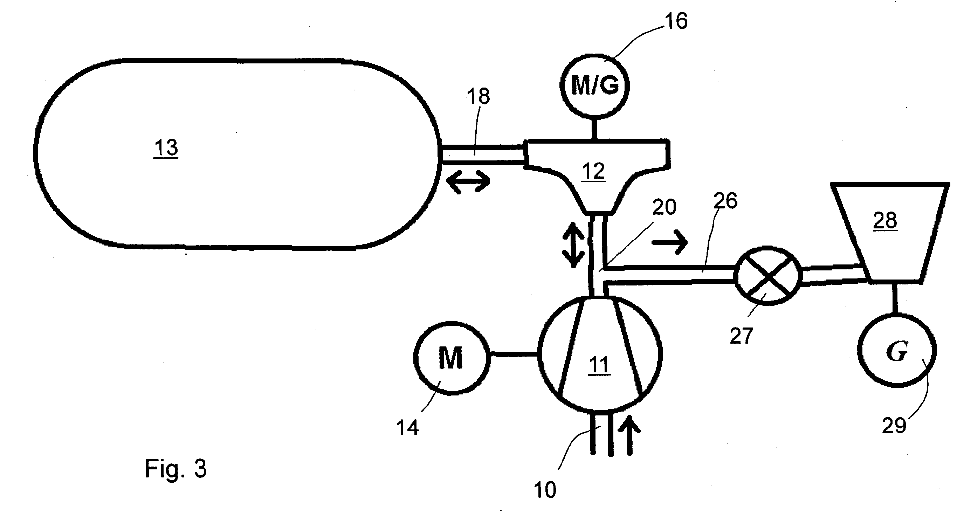

In der Ausführungsform gemäß Figur 3 weist die Leitung 20 zwischen Hochdruckverdichter 12 und Niederdruckverdichter 11 einen Abzweig 26 auf, mit Brennkammer 27 und anschließender Turbine 28, welcher ein Generator 29 zugeordnet ist. Vorzugsweise ist in diesem Fall dem Niederdruckverdichter 11 als elektrische Maschine nur ein Motor zugeordnet.

Das Einspeichern der Druckluft erfolgt wie in Figur 1 über den Niederdruckverdichter 11 und den Hochdruckverdichter 12 in den Behälter 13. Beim Ausspeichern expandiert die Druckluft über den als Turbine laufenden Hochdruckverdichter 12, wird in der Brennkammer 27 erhitzt und strömt durch die Turbine 28 zum Antrieb des Generators 29. Hierzu kann der Niederdruckverdichter 11 im Bereich seiner Hochdruckseite 21 verschlossen sein, entweder bauartbedingt bei Stillstand oder durch ein Ventil.

Für den Fall, dass die Leistung der Anlage bei Expansionsbetrieb viel größer als bei Kompression ist, kann eine Expansion gleichzeitig durch den Niederdruckverdichter 11 und die Turbine 28 parallel erfolgen. Möglich ist auch ein Schnellstartventil, das Gas aus dem Behälter 13 am Hochdruckverdichter 12 vorbei in die Leitung 20 leitet.

### Bezugszeichenliste:

- 10: Leitung
- 11: Niederdruckverdichter
- 12: Hochdruckverdichter
- 13: Behälter
- 14: elektrische Maschine
- 15: Leitschaufeln
- 16: elektrische Maschine
- 17: Hochdruckseite (Hochdruckverdichter)
- 18: Leitung
- 19: Niederdruckseite (Hochdruckverdichter)
- 20: Leitung
- 21: Hochdruckseite (Niederdruckverdichter)
- 22: Niederdruckseite (Niederdruckverdichter)
- 23: Laufrad
- 24: Spirale
- 25: Pfeil
- 26: Abzweig
- 27: Brennkammer
- 28: Turbine
- 29: Generator

## Patentansprüche

1. Vorrichtung zur Erzeugung von Druckluft oder anderen unter Druck stehenden Gasen, mit mindestens je einem Hochdruckverdichter (12) und einem Niederdruckverdichter (11), und insbesondere einem nachgeordneten Gasspeicher (Behälter 13), wobei der Hochdruckverdichter (12) eine Turbomaschine mit verstellbaren Leitschaufeln (15) ist und wechselweise in der einen Richtung als Kompressor und in der anderen Richtung als Expansionsmaschine durchströmt wird.

2. Vorrichtung nach Anspruch 1, **dadurch gekennzeichnet, dass** die Drehzahl des Hochdruckverdichters variabel einstellbar ist, insbesondere in Abhängigkeit vom Druckverhältnis einer Hochdruckseite zur Niederdruckseite des Hochdruckverdichters.

3. Vorrichtung nach Anspruch 1, **dadurch gekennzeichnet, dass** der Hochdruckverdichter eine radiale Turbomaschine mit Laufrad und Spirale ist, und dass die verstellbaren Leitschaufeln zwischen Laufrad und Spirale angeordnet sind.

4. Vorrichtung nach Anspruch 1 oder einem der weiteren Ansprüche, **dadurch gekennzeichnet, dass** dem Hochdruckverdichter (12) ein Motor-Generator als elektrischer Antrieb zugeordnet ist.

5. Vorrichtung nach Anspruch 1 oder einem der weiteren Ansprüche, **dadurch gekennzeichnet, dass** auch der Niederdruckverdichter wechselweise als Verdichter und als Expansionsmaschine durchströmt wird, wobei dem Niederdruckverdichter vorzugsweise ein Motor-Generator als elektrischer Antrieb zugeordnet ist.

6. Vorrichtung nach Anspruch 1 oder einem der weiteren Ansprüche, **dadurch gekennzeichnet, dass** zwischen Hochdruckverdichter (12) und Niederdruckverdichter (11) ein Abzweig (26) zu einer Turbine (28) vorgesehen ist, wobei der Turbine (28) eine Brennkammer (27) zugeordnet sein kann, und wobei die Turbine (28) insbesondere mit einem elektrischen Generator (29) verbunden ist.

7. Verfahren zur Herstellung und/oder Speicherung von Druckluft oder anderen Gasen in Behältern (13) unter Verwendung einer Vorrichtung nach einem oder mehreren der voranstehenden Ansprüche.

8. Verfahren zur mittelbaren Speicherung elektrischer Energie durch Kompression und Expansion von Druckluft oder anderen Gasen und unter Verwendung einer Vorrichtung nach einem oder mehreren der voranstehenden Ansprüche.

9. Verfahren nach Anspruch 7 oder 8, **dadurch gekennzeichnet, dass** der Hochdruckverdichter (12) mit einem Druckverhältnis zwischen 1,5 und 4 betrieben wird.

10. Verfahren nach Anspruch 7 oder einem der weiteren Ansprüche, **dadurch gekennzeichnet, dass** ein Quotient aus maximalem und minimalem Druckverhältnis des Hochdruckverdichters größer als 1,3 ist, insbesondere größer als 1,8.

11. Verfahren nach Anspruch 7 oder einem der weiteren Ansprüche, **dadurch gekennzeichnet, dass** der Druck auf der Hochdruckseite (21) des Niederdruckverdichters (11) weniger als +/- 15%, vorzugsweise weniger als +/- 5% um seinen Mittelwert schwankt.

12. Verfahren nach Anspruch 7 oder einem der weiteren Ansprüche, **dadurch gekennzeichnet, dass** der Druck auf der Hochdruckseite (17) des Hochdruckverdichters (12) mehr als +/- 20%, vorzugsweise über +/- 30% um seinen Mittelwert schwankt.

13. Verfahren nach Anspruch 7 oder einem der weiteren Ansprüche, **dadurch gekennzeichnet, dass** das Gas bei der Expansion nach dem Verlassen des Hochdruckverdichters (12) mit Brennstoff erhitzt und einer Turbine (28) mit Generator (29) zugeführt wird.
